# EUROPÄISCHE PATENTANMELDUNG

(11) **EP 4 659 839 A1**
(43) Veröffentlichungstag der Anmeldung: **10.12.2025**
(21) Anmeldenummer: 25180922.4
(22) Anmeldetag: 05.06.2025
(51) Int. Cl.: B01D 53/04, B01D 53/047

(54) **SORPTIONSMODUL ZUR ABTRENNUNG VON KOHLENSTOFFDIOXID AUS DER UMGEBUNGSLUFT**

(30) Priorität: 05.06.2024 DE 102024115682
(71) Anmelder: VOLKSWAGEN AG, 38440 Wolfsburg (DE)
(72) Erfinder: Zlatkov, Branislav, 38104 Braunschweig (DE); Block, Gerald, 38165 Lehre (DE); Marceta Kaninski, Milica, 11000 Belgrad (RS); Nikolic, Vladimir, 11000 Belgrad (RS); Mudrinic, Mihajlo, 11070 Belgrad (RS)
(74) Vertreter: Gulde & Partner

(57) **Zusammenfassung**

Die Erfindung betrifft ein Sorptionsmodul (100, 200, 300) zur Abtrennung von Kohlenstoffdioxid aus der Umgebungsluft.

Es ist vorgesehen, dass ein Sorptionsmodul (100, 200, 300) zur Abtrennung von Kohlenstoffdioxid aus der Umgebungsluft, die folgenden Komponenten umfasst: eine Basis (10), einen Mantel (20) und eine Abdeckung (30), die einen Prozessraum (40) bilden, der Mantel (20) den Prozessraum (40) umschließt, die Basis (10) eine gasdicht verschließbare Einlassöffnung (12) aufweist, und die Abdeckung (30) eine gasdicht verschließbare Auslassöffnung (32) aufweist; einen Strömungserzeuger (50) zur Förderung von Umgebungsluft durch den Prozessraum (4) des Sorptionsmoduls (100, 200, 300); mindestens ein Sorptionselement (60), das im Prozessraum (40) angeordnet ist, wobei das Sorptionselement (60) ein Sorptionsmittel (62) zur Adsorption von Kohlenstoffdioxid aus der Umgebungsluft und ein Mittel (64) zum Fixieren des Sorptionsmittels (62) umfasst; ein regelbares Heizelement (70) zur Aufheizung des Sorptionsmittels (62) auf eine Desorptionstemperatur oder eine Regenerationstemperatur; und ein regelbares Mittel zur Erzeugung eines Unterdrucks (80) im Prozessraum (40); wobei der Mantel (20) einen Innenmantel (22) und einen den Innenmantel umschließenden Außenmantel (24) umfasst; der Innenmantel (22) mindestens einen Schacht (26) aufweist, der sich über die Höhe des Innenmantels (22) erstreckt und innenseitig über die gesamte Höhe des Schachts (26) zum Prozessraum (40) offen ist; und der Außenmantel (24) mindestens eine gasdicht verschließbare Entnahmeöffnung (28, 28a) aufweist, die in einer Öffnungsstellung innenseitig über jeweils einen Schacht (26, 26a) des Innenmantels mit dem Prozessraum (40) verbunden ist und außenseitig mit dem regelbaren Mittel zur Erzeugung eines Unterdrucks (80) verbunden ist.

## Beschreibung

Die Erfindung betrifft ein Sorptionsmodul zur Abtrennung von Kohlenstoffdioxid aus der Umgebungsluft und für die Regeneration eines im Sorptionsmodul befindlichen Sorptionsmittels gemäß dem Oberbegriff des unabhängigen Patentanspruchs.

Zur Reduzierung der Kohlenstoffdioxidemissionen in der Umgebungsluft und zur Erreichung der Klimaneutralität müssen nicht nur die Kohlenstoffdioxidemissionen verringert werden, sondern auch nicht vermeidbare Kohlenstoffdioxidemissionen entsprechend kompensiert werden. Eine Möglichkeit, diese Kohlenstoffdioxidemissionen zu kompensieren stellt ein Abscheiden von Kohlenstoffdioxid aus der Umgebungsluft dar. Ein solches Verfahren wird auch als Direct-Air Capture-Verfahren (DAC-Verfahren) bezeichnet und ist geeignet, den Anteil an Kohlenstoffdioxid in der Atmosphäre zu reduzieren.

Aus dem Stand der Technik sind Sorptionsmodule sowie Verfahren zum Abscheiden von Kohlenstoffdioxid aus der Umgebungsluft bekannt. Diese Verfahren umfassen typischerweise einen zyklischen Prozess unter Anwendung einer Kombination aus Druck- und/oder Temperaturwechseln. Dabei wird in der Atmosphärenluft befindliches Kohlenstoffdioxid in einem ersten Prozessschritt durch ein Sorptionselement geleitet und mittels eines geeigneten Sorptionsmittel (Sorbens) gebunden. Das in dem Sorptionsmittel gebundene Kohlenstoffdioxid kann in einem zweiten Prozessschritt wieder freigesetzt werden. Durch die Entwicklung von geeigneten Sorptionsmitteln sowie deren technischer Umsetzung in entsprechenden Sorptionselementen und Sorptionsmodulen soll eine effiziente und energetisch effektive Abscheidung von Kohlenstoffdioxid ermöglicht werden, zum Beispiel, durch die optimierte Anordnung und/oder Ausgestaltung der in den Sorptionsmodulen befindlichen Sorptionselemente.

Eine bisher vernachlässigte Aufgabe besteht in der technischen Umsetzung der Regeneration des Sorptionsmittels. Es ist bekannt, dass Sorptionsmittel, insbesondere Physisorbenten, neben der gewünschten Bindungsaffinität für Kohlenstoffdioxid, eine teils höhere Bindungsaffinität für Wassermoleküle aufweisen. Da selbst vorgetrocknete Luft einen Restanteil an Feuchtigkeit enthält, hat die höhere Bindungsaffinität für Wasser zur Folge, dass das Sorptionsmittel im Verlauf mehrerer Betriebszyklen mit Wasser gesättigt wird und somit die Adsorptionskapazität des Physisorbenten für Kohlenstoffdioxid sinkt und der DAC-Prozess insgesamt ineffizienter wird. Das Sorptionsmittel beziehungsweise der Physisorbent muss demnach entweder aus dem Prozessraum des Sorptionsmoduls aufwendig entfernt und ersetzt werden, oder intern durch ein regelmäßiges Entfernen des gebundenen Wassers regeneriert werden. Die Regeneration des Sorptionsmittels sowie die Desorption von Kohlenstoffdioxid sind jedoch energieintensiv, da erhöhte Temperaturen und/oder Unterdruck benötigt werden um die gebundenen Moleküle aus dem Sorptionsmittel zu lösen.

Der Erfindung liegt nun die Aufgabe zugrunde, ein Sorptionsmodul bereitzustellen, das ohne Entfernen des Sorptionsmittels aus dem Sorptionsmodul, den Energiebedarf für die Regeneration des Sorptionsmittels senkt. Ferner soll auch der Energiebedarf für die Desorption von Kohlenstoffdioxid aus dem Sorptionsmittel gesenkt werden.

Die Aufgabe wird durch ein erfindungsgemäßes Sorptionsmodul zur Abtrennung von Kohlenstoffdioxid aus der Umgebungsluft gelöst. Das Sorptionsmodul umfasst eine Basis, einen Mantel und eine Abdeckung, die einen Prozessraum bilden, wobei der Mantel den Prozessraum (seitlich) umschließt. Die Basis bildet die Unterseite des Prozessraums und schließt mit dem unteren Ende des Mantels gasdicht ab. Die Abdeckung bildet die Oberseite des Prozessraums und schließt mit dem oberen Ende des Mantels gasdicht ab. Die Basis weist eine gasdicht verschließbare Einlassöffnung auf, durch welche Umgebungsluft in den Prozessraum eingeleitet werden kann. Die Abdeckung weißt eine gasdicht verschließbare Auslassöffnung auf, durch welche kohlenstoffdioxidärmere Luft aus dem Prozessraum abgeleitet werden kann. Zudem umfasst das Sorptionsmodul einen Strömungserzeuger zur Förderung von Umgebungsluft durch den Prozessraum des Sorptionsmoduls.

Im Prozessraum ist mindestens ein (ein oder mehrere) Sorptionselement(e) angeordnet. Das Sorptionselement umfasst ein Sorptionsmittel zur Adsorption von Kohlenstoffdioxid aus der Umgebungsluft und ein Mittel zum Fixieren des Sorptionsmittels.

Das Sorptionsmodul umfasst zudem ein regelbares Heizelement zur Aufheizung des Sorptionsmittels auf eine Desorptionstemperatur oder eine Regenerationstemperatur. Außerdem umfasst das Sorptionsmodul ein regelbares Mittel zur Erzeugung eines Unterdrucks im Prozessraum.

Der Mantel umfasst einen Innenmantel und einen Außenmantel, der den Innenmantel (gasdicht) umschließt. Der Innenmantel weist mindestens einen Schacht (Kanal) auf, der sich über die Höhe des Innenmantels erstreckt und innenseitig über die gesamte Höhe des Schachts zum Prozessraum offen ist. Der Außenmantel weist mindestens eine gasdicht verschließbare Entnahmeöffnung auf, die in einer Öffnungsstellung innenseitig (das heißt dem Innenmantel zugewandt) über jeweils einen (einzigen) Schacht des Innenmantels mit dem Prozessraum (strömungsdurchlässig) verbunden ist und außenseitig mit dem regelbaren Mittel zur Erzeugung eines Unterdrucks verbunden ist.

Durch die erfindungsgemäße Ausgestaltung des Mantels und besonders durch die Ausgestaltung des einen oder mehrerer Schächte im Innenmantel, können das, durch Temperaturerhöhung und/oder Druckminderung aus dem Sorptionsmittel freigesetzte Wasser und Kohlenstoffdioxid effizienter aus dem Prozessraum abgeleitet werden. Hierbei besteht die Effizienzsteigerung darin, dass weniger Energie für den Desorptionsschritt und für den Regenerationsschritt benötigt wird. Die freigesetzten Moleküle erfahren aufgrund der Ableitung über den Schacht einen geringeren Strömungswiderstand, als sie erfahren würden, wenn die Moleküle über das verbleibende Volumen des Sorptionsmittels im Sorptionselement oder über mehrere Sorptionselemente bis hin zur Entnahmeöffnung geleitet würden. Mit anderen Worten, wird die Anzahl der Bindungs- beziehungsweise Einlagerungs-Vorgänge des Moleküls (CO₂ oder H₂O) mit dem Sorptionsmittel (zum Beispiel durch reversible Einlagerung in die poröse Mikrostruktur des Sorptionsmittels) verringert, indem die Strecke die das Molekül bis zur Entnahmeöffnung zurücklegen muss erfindungsgemäß jedenfalls zu einem Teil über den Schacht des Innenmantels verläuft, der kein Sorptionsmittel beinhaltet.

Unter einer Desorptionstemperatur ist in diesem Zusammenhang eine Temperatur zu verstehen, bei welcher das chemisch oder physisch in dem Sorptionsmittel gebundene Kohlenstoffdioxid wieder freigesetzt wird. Unter einer Regenerationstemperatur ist in diesem Zusammenhang eine Temperatur zu verstehen, bei welcher das Sorptionsmittel wieder in den Ausgangszustand überführt wird, insbesondere bei der im Sorptionsmittel gebundenes Wasser (ursprünglich aus Luftfeuchte) wieder freigesetzt wird.

Vorliegend wird unter der Höhe (H) des Prozessraums, entsprechend der Höhe des Mantels und somit der Höhe des Innenmantels, der Abstand der zwei parallelen Ebenen verstanden in denen die Kontaktlinie des Mantels mit der Basis und die Kontaktlinie des Mantels mit der Abdeckung liegen.

Der Strömungserzeuger zur Förderung von Umgebungsluft durch den Prozessraum des Sorptionsmoduls kann beispielsweise als ein Ventilator ausgestaltet sein. Der Strömungserzeuger kann dem Prozessraum in Strömungsrichtung vorgeordnet oder nachgeordnet sein. Entsprechend kann der Strömungserzeuger dazu ausgelegt sein, Umgebungsluft in den Prozessraum einzuströmen oder kohlenstoffdioxidarme Luft aus dem Prozessraum heraus zu fördern.

Die gasdicht verschließbare Einlassöffnung der Basis und die gasdicht verschließbare Auslassöffnung der Abdeckung können als (unabhängig voneinander) steuerbare Armaturen ausgestaltet sein. Steuerbare Armaturen umfassen Ventile, Absperrklappen und Absperrschieber.

In vorteilhafter Ausgestaltung der Erfindung ist vorgesehen, dass der Innenmantel zum stationären Außenmantel beweglich angeordnet ist und so konfiguriert ist, dass in einer Schließstellung der Innenmantel die Entnahmeöffnung des Außenmantels gasdicht schließt und in einer Öffnungsstellung je ein einziger Schacht des Innenmantels mit einer einzigen Entnahmeöffnung des Außenmantels verbunden ist. Mit anderen Worten, kann die Verbindung zwischen der Entnahmeöffnung des Außenmantels und einem Schacht des Innenmantels beispielsweise durch eine Drehbewegung des Innenmantels gegenüber dem feststehenden Außenmantel gasdicht geschlossen werden. Vorzugsweise umfasst das Sorptionsmodul in dieser Ausführungsform steuerbare Mittel zum Bewegen des Innenmantels.

In weiterer vorteilhafter Ausgestaltung der Erfindung ist vorgesehen, dass der Außenmantel zusätzlich zur vorstehend genannten Ausführungsform oder als Alternative ein Mittel zum Schließen der Entnahmeöffnung umfasst. Das Mittel zum Schließen der Entnahmeöffnung kann beispielsweise als steuerbare Armatur ausgestaltet sein. Die steuerbare Armatur umfasst beispielsweise Ventile, Absperrklappen und Absperrschieber. Das Mittel zum Schließen der Entnahmeöffnung kann vorzugsweise außenseitig (das heißt zum Beispiel auf der dem Innenmantel abgewandten Oberfläche des Außenmantels) angeordnet sein. Das Mittel zum Schließen der Entnahmeöffnung kann ferner innenseitig (das heißt zwischen Innen- und Außenmantel) angeordnet sein, beispielsweise in Form eines Absperrschiebers.

Erfindungsgemäß weist der Innenmantel mindestens einen Schacht (Kanal) auf, der sich über die Höhe des Innenmantels erstreckt und innenseitig über die gesamte Höhe des Schachts zum Prozessraum offen ist. Mit anderen Worten, erstreckt sich ein Schacht des Innenmantels (vertikal) von der Basis bis zur Abdeckung. Bevorzugt kann sich der Schacht über mindestens 80 % der Höhe des Innenmantels erstrecken. Besonders bevorzugt kann sich der Schacht über die gesamte Höhe des Innenmantels erstrecken.

Der Schacht ist auf der zum Prozessraum gerichteten Seite des Innenmantels vollständig offen. Der Schacht ist auf der zum Außenmantel gerichteten Seite des Innenmantels zumindest teilweise offen. Die Dimensionen des Schachts können vorzugsweise so gewählt sein, dass das Sorptionselement nicht in den oder die Schächte eindringen kann.

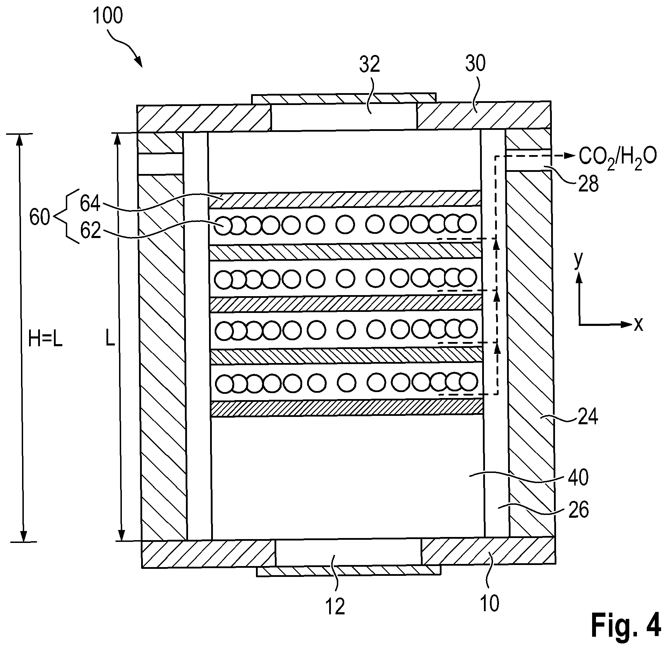

Die Dimensionen des Schachts sind vorliegend durch Länge L, Tiefe T und Breite B definiert. Die Länge L des Schachts kann parallel zur Höhe H des Innenmantels bestimmt werden (zum Beispiel in Bezug auf Figur 4 entlang einer y-Achse). Erstreckt sich der Schacht über beispielsweise 80% der Höhe des Innenmantels, so entspricht die Länge L des Schachts 80% der Höhe des Innenmantels.

Die Breite B des Schachts kann in Relation zum Gesamtumfang des Innenmantels bestimmt werden. Zum Beispiel kann in einer Ausführungsform mit einem einzigen Schacht, dessen Breite B 10 bis 40 % des Gesamtumfangs des Innenmantels betragen. In einer Ausführungsform mit mindestens zwei Schächten kann die Summe der einzelnen Breiten der Schächte 10 bis 50 % des Gesamtumfangs des Innenmantels betragen. Der Gesamtumfang entspricht bei einem kreiszylindrischen Prozessraum dem Umfang der Innenseite des Innenmantels ohne Berücksichtigung der Schächte, oder bei einem prismatischen Prozessraum der Summe der Seitenlängen ohne Berücksichtigung der Schächte.

Die Tiefe T des Schachts kann parallel zur Dicke des Innenmantels bestimmt werden (zum Beispiel in Bezug auf Figur 4 entlang einer x -Achse). Zum Beispiel kann die Tiefe T des Schachts der Dicke D des Innenmantels entsprechen.

In bevorzugter Ausführungsform kann die Breite eines Schachts 5 mm bis 200 mm betragen. Ferner kann die Tiefe eines Schachts 5 mm bis 200 mm betragen. Zum Beispiel kann ein Schacht eine Breite von 200 mm und eine Tiefe von 200 mm aufweisen.

In besonders vorteilhafter Ausgestaltung der Erfindung ist vorgesehen, dass der Innenmantel mindestens zwei Schächte aufweist, die vorzugsweise in einem gleichmäßigen Abstand zueinander angeordnet sind, und der Außenmantel gleich viele Entnahmeöffnungen aufweist. Beispielsweise kann der Innenmantel zwei gegenüberliegende Schächte aufweisen. Vorzugsweise kann der Innenmantel insgesamt vier, mit je zwei gegenüberliegenden Schächten aufweisen. Auch kann der Innenmantel drei oder fünf Schächte in gleichmäßigen Abständen zueinander aufweisen. In einer weniger bevorzugten Ausführungsform können die mindestens zwei Schächte auch in ungleichmäßigen Abständen zueinander angeordnet sein.

Durch eine Vielzahl von Schächten und optional deren gleichmäßiger Abstand zueinander ergibt sich im Mittel für die freigesetzten Wasser- und Kohlenstoffdioxid-Moleküle eine verkürzte Strecke durch das Sorptionsmittel. Hierdurch können Heizdauer und Evakuierungsdauer und somit der Energiebedarf während des Desorptions- und Regenerationsschritts weiter reduziert werden.

Unter einem Sorptionsmittel ist in diesem Zusammenhang ein Material zu verstehen, welches dazu geeignet ist durch chemische oder physische Prozesse ein zu adsorbierendes Gas, insbesondere Kohlenstoffdioxid, reversibel an sich zu binden und bei einer Änderung der Prozessparameter, wie beispielsweise einer Temperaturerhöhung und/oder Druckminderung, wiederfreizusetzen. Ein Sorptionsmittel, das dazu geeignet ist, durch physikalische Prozesse ein zu adsorbierendes Gas, insbesondere Kohlenstoffdioxid, reversibel an sich zu binden, wird vorliegend als Physisorbent bezeichnet.

Das Sorptionsmittel kann vorzugsweise ein Physisorbent sein. Besonders bevorzugt kann das Sorptionsmittel ein Zeolith umfassen. Das Zeolith ist beispielsweise aus mindestens einem der Zeolithe: Zeolith A (Na₁₂[(AlO₂)₁₂(SiO₂)₁₂] · 27 H₂O), Zeolith X (Na₈₆[(AlO₂)₈₆(SiO₂)₁₀₆] · 264 H₂O), Zeolith Y (Na₅₆[(AlO₂)₅₆(SiO₂)₁₃₆] · 250 H₂O), Zeolith L (K₉[(AlO₂)₉(SiO₂)₂₇] · 22 H₂O), ZSM 5 (Na_{0,3}H_{3,8}[(AlO₂)_{4,1}(SiO₂)_{91,9}], und ZSM 11 (Na_{0,1}H_{1,7}[(AlO₂)_{1,8}(SiO₂)_{94,2}]) ausgewählt.

In vorteilhafter Ausgestaltung der Erfindung ist vorgesehen, dass das Sorptionsmittel insgesamt 75 % bis 95 % Raumfüllung, vorzugsweise 80 % bis 95 % Raumfüllung des Prozessraums ausfüllt.

Die prozentuale Raumfüllung berechnet sich aus dem Volumen des Sorptionsmittels bezogen auf das Gesamtvolumen des Prozessraums. Das Gesamtvolumen des Prozessraums ergibt sich beispielsweise aus dem Produkt der Höhe des Mantels und der Fläche der Basis, wobei die Fläche der Basis und die Fläche der Abdeckung im Wesentlichen gleich sind. Das Volumen des Schachts oder der Schächte ist nicht im Gesamtvolumen des Prozessraums enthalten. Gemäß ISO 15901-2 kann die Porengrößenverteilung und Porosität des Sorptionsmittels bestimmt werden. Gemäß ASTM D 1895:2017 kann die Rohdichte des Sorptionsmittels und hieraus das Volumen des Sorptionsmittels bestimmt werden. Gemäß DIN EN ISO 17892-3 kann die Korndichte des Sorptionsmittels und hieraus das Volumen des Sorptionsmittels bestimmt werden. Gemäß DIN ISO 697 oder EN ISO 60 kann die Schüttdichte des Sorptionsmittels und hieraus das Volumen des Sorptionsmittels bestimmt werden.

In weiterer vorteilhafter Ausgestaltung der Erfindung ist vorgesehen, dass die Form des Sorptionsmittels aus mindestens einer Form umfassend Granulat, Platte, Rundstab und Kantstab ausgewählt ist. Vorzugsweise können die Partikel des Granulats einen durchschnittlichen Durchmesser (D50) von 0.3 mm bis 8.0 mm aufweisen (bestimmt durch Siebung). Rundstäbe mit einem kreisförmigen Querschnitt können vorzugsweise einen Durchmesser von 0.3 mm bis 8.0 mm aufweisen. Kantstäbe mit quadratischem Querschnitt können vorzugsweise ein Seitenmaß von 0.3 mm bis 5.0 mm aufweisen. Das Sorptionsmittel ist vorzugsweise in die vorstehend genannten Formen extrudiert (gepresst). Das Sorptionsmittel kann bevorzugt als Schüttung der zuvor genannten, ausgeformten Sorptionsmittel vorliegen. Zum Beispiel kann das Sorptionsmittel als Schüttung eines Granulats vorliegen.

In vorteilhafter Ausgestaltung der Erfindung ist vorgesehen, dass der Prozessraum (im Wesentlichen) zylindrisch oder prismatisch ausgestaltet ist. Besonders vorteilhaft, im Hinblick auf den Betrieb bei vermindertem Druck, ist ein zylindrisch ausgestalteter Prozessraum mit kreisrunder oder ellipsoider Ausgestaltung der Basis und der Abdeckung. Vorteilhafte Ausführungen umfassen jedoch auch prismatisch ausgestaltete Prozessräume mit beispielsweise vier-, fünf-, sechs-, sieben- oder acht-eckiger Ausgestaltung der Basis und der Abdeckung.

In weiterer vorteilhafter Ausgestaltung der Erfindung ist vorgesehen, dass das regelbare Heizelement als Heizspirale oder als Heizmatte ausgestaltet ist. Vorzugsweise kann das regelbare Heizelement in das Sorptionselement integriert (zum Beispiel eingebettet) sein. Die Integration des regelbaren Heizelements, zum Beispiel einer Heizspirale oder einer Heizmatte, in das Sorptionselement hat den vorteilhaften Effekt, dass eine direktere Wärmeübertragung auf das Sorptionsmittel erfolgt. Energieverluste durch zusätzliche Wärmeübergänge, wie beispielsweise vom Heizelement auf den Mantel, dann auf die Umgebungsluft im Prozessraum und schließlich auf das Sorptionsmittel können somit reduziert oder vermieden werden. Alternativ oder in Kombination der vorstehend beschriebenen Ausführungsform kann das regelbare Heizelement als Heizlüfter ausgestaltet sein und dem Prozessraum in Strömungsrichtung vorgeordnet sein. In dieser Ausführungsform kann heiße Luft mittels des Heizlüfters in den Prozessraum eingeströmt werden und nach der Kontaktierung und Regeneration des Sorptionsmittels über zumindest den mindestens einen Schacht des Innenmantels und die Entnahmeöffnung abgeleitet werden. Alternativ oder in Kombination der vorstehend beschriebenen Ausführungsformen kann das regelbare Heizelement im Innenmantel und/oder Außenmantel integriert sein.

Die Entnahmeöffnung des Außenmantels kann bevorzugt innerhalb der oberen Hälfte des Außenmantels, besonders bevorzugt des obersten Viertels des Außenmantels angeordnet sein. Besonders bevorzugt kann die Entnahmeöffnung des Außenmantels am oberen Ende des Außenmantels angeordnet sein. Eine derartige Anordnung der Entnahmeöffnung ermöglicht die zusätzliche Ausnutzung des Effekts der natürlichen Konvektion im Schacht des Innenmantels und reduziert so den Gesamtenergiebedarf.

Das Mittel zum Fixieren des Sorptionsmittels ist derart ausgestaltet oder ausgeformt, dass das Sorptionsmittel nicht in den Schacht oder die Schächte des Innenmantels gelangt.

In vorteilhafter Ausgestaltung der Erfindung ist vorgesehen, dass das Mittel zum Fixieren des Sorptionsmittels als Tasche oder als Träger ausgestaltet ist. Die Tasche beinhaltet (zum Beispiel umhüllt) das Sorptionsmittel und ist gas- und feuchtigkeitsdurchlässig. Beispiele für Taschen umfassen Membrantaschen, Netztaschen und Fließtaschen. Der Träger umfasst ein poröses Matrixmaterial, wobei das Matrixmaterial mit dem Sorptionsmittel als Komposit in (kreis-)zylindrische Scheiben oder prismatische Platten ausgeformt ist. Das poröse Matrixmaterial ist gas- und feuchtigkeitsdurchlässig. Ein Beispiel für das poröse Matrixmaterial sind Polymerschwämme.

In besonders vorteilhafter Ausgestaltung der Erfindung ist vorgesehen, dass eine Vielzahl von Sorptionselementen seriell, zum Beispiel in einer Kaskade, im Prozessraum angeordnet sind.

Das regelbare Mittel zur Erzeugung eines Unterdrucks im Prozessraum kann beispielsweise eine Vakuumpumpe und/oder eine Kondensationspumpe sein. Eine Kondensationspumpe ist zum Beispiel eine Kühlfalle. Eine Vakuumpumpe umfasst zum Beispiel eine Membranpumpe oder eine Drehschieberpumpe.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein aus dem Stand der Technik bekanntes Sorptionsmodul zur Abtrennung von Kohlenstoffdioxid aus der Umgebungsluft;
- Figur 2: eine schematische Darstellung einer Ausführungsform des erfindungsgemäßen Sorptionsmoduls zur Abtrennung von Kohlenstoffdioxid aus der Umgebungsluft;
- Figur 3: eine schematische Draufsicht einer Ausführungsform des erfindungsgemäßen Sorptionsmoduls zur Abtrennung von Kohlenstoffdioxid aus der Umgebungsluft mit zwei gegenüberliegenden Schächten des Innenmantels;
- Figur 4: ein schematischer Querschnitt einer Ausführungsform des erfindungsgemäßen Sorptionsmoduls mit vier seriell angeordneten Sorptionselementen im Prozessraum;
- Figur 5: eine schematische Draufsicht einer weiteren Ausführungsform des erfindungsgemäßen Sorptionsmoduls mit vier Schächten, die in gleichmäßigen Abständen zueinander im Innenmantel angeordnet sind;
- Figur 6: ein schematischer Querschnitt einer weiteren Ausführungsform des erfindungsgemäßen Sorptionsmoduls mit einem regelbaren Heizelement, hier ein Heizelement mit einer Vielzahl von Heizspiralen, die in die Sorptionselemente eingebettet sind.

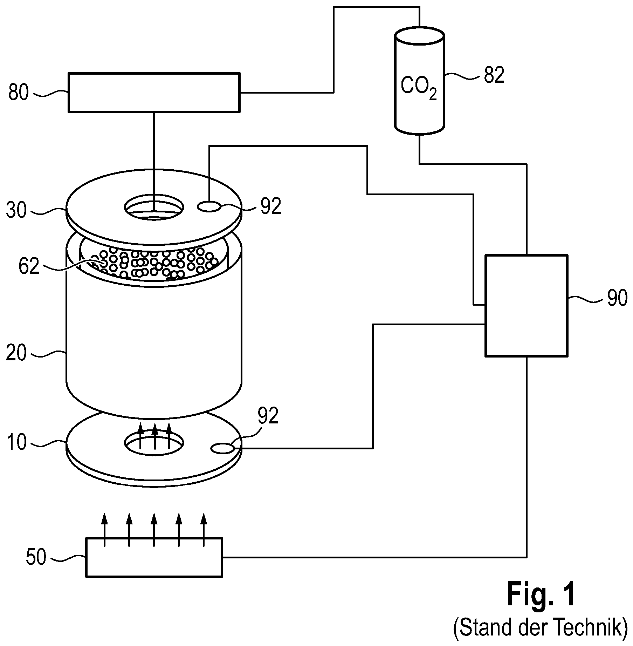

Figur 1 zeigt ein aus dem Stand der Technik bekanntes Sorptionsmodul zur Abtrennung von Kohlenstoffdioxid aus der Umgebungsluft in einer schematischen Darstellung. Das Sorptionsmodul umfasst eine Basis 10, einen Mantel 20 und eine Abdeckung 30, die einen aufrecht ausgerichteten kreiszylindrischen Prozessraum 40 bilden. Ein Strömungserzeuger 50 fördert Umgebungsluft durch eine Einlassöffnung der Basis in den Prozessraum 40. Im Prozessraum 40 ist ein Sorptionsmittel 62 eingebracht, das von der eingeströmten Umgebungsluft kontaktiert wird und Kohlenstoffdioxid absorbiert. Die kohlenstoffdioxidärmere Luft kann über eine Auslassöffnung in der Abdeckung 30 aus dem Prozessraum ausströmen. Für die Desorption des Kohlenstoffdioxids umfasst das Sorptionsmodul typischerweise ein regelbares Mittel zur Erzeugung eines Unterdrucks 80 im Prozessraum 40 und ein Heizelement zur Aufheizung des Sorptionsmittels 62 im Prozessraum auf die entsprechende Desorptionstemperatur (Heizelement nicht gezeigt). Das im Desorptionsschritt freigesetzte Kohlenstoffdioxid kann in einem geeigneten CO₂-Speicher 82 zwischengelagert oder in anderer Weise verwertet werden. Eine Steuereinheit 90 ist dazu ausgelegt mittels Sensorsystemen 92, umfassend Temperatursensor, Drucksensor, Luftfeuchtesensor und Durchflusssensor, entsprechende Parameter zu erfassen und den Strömungserzeuger 50, das Mittel zur Erzeugung eines Unterdrucks 80 und das Heizelement zu steuern.

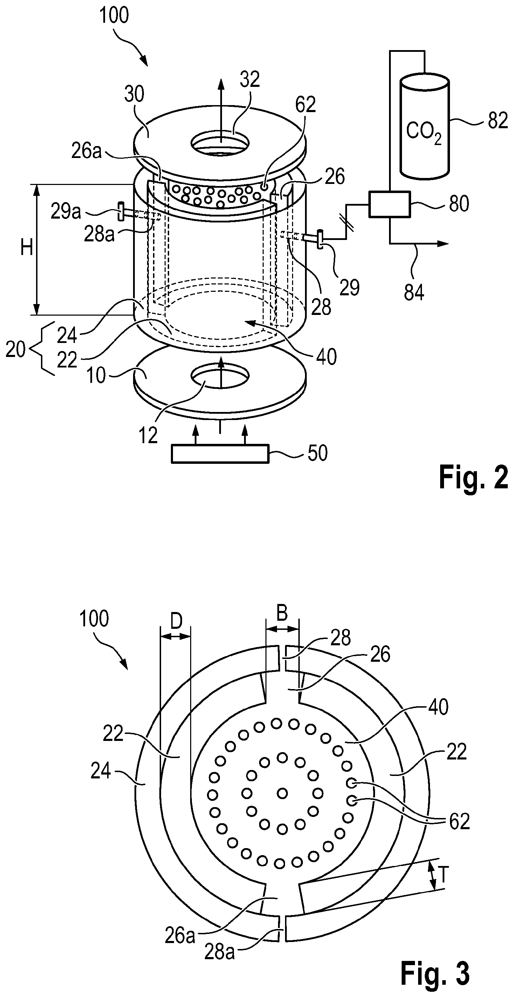

Figur 2 zeigt eine erfindungsgemäße Ausführungsform des Sorptionsmoduls 100 zur Abtrennung von Kohlenstoffdioxid aus der Umgebungsluft. Das Sorptionsmodul umfasst eine Basis 10, einen Mantel 20 und eine Abdeckung 30 die gemeinsam einen Prozessraum 40 ausbilden. Der Mantel 20 umschließt den Prozessraum 40 längsseitig. Die Basis 10 und die Abdeckung 30 schließen den Mantel zur Unterseite beziehungsweise zur Oberseite ab, sodass Basis 10, Mantel 20 und Abdeckung 30 einen im wesentlichen kreiszylindrischen Hohlzylinder ausformen, der senkrecht (vertikal) ausgerichtet ist. Die Basis 10 weist eine gasdicht verschließbare Einlassöffnung 12 auf, durch die Umgebungsluft in den Prozessraum eingeströmt werden kann. Die Einlassöffnung 12 umfasst ferner eine steuerbare Armatur (nicht gezeigt), welche die Einlassöffnung gasdicht abschließt oder öffnet. Die Abdeckung 30 weist eine gasdicht verschließbare Auslassöffnung 32 auf, durch die Kohlenstoffdioxid arme Luft aus dem Prozessraum abgelassen werden kann. Die Auslassöffnung 32 umfasst ferner eine steuerbare Armatur (nicht gezeigt), welche die Auslassöffnung gasdicht abschließt oder öffnet.

In dieser Ausführungsform ist zudem ein Strömungserzeuger 50 der Einlassöffnung in Strömungsrichtung vorgeordnet und dient der Förderung von Umgebungsluft durch den Prozessraum 40. Im Prozessraum 40 ist mindestens ein Sorptionselement angeordnet, welches das Sorptionsmittel 62 zur Adsorption von Kohlenstoffdioxid aus der eingeleiteten Umgebungsluft und ein Mittel zum Fixieren des Sorptionsmittels (nicht gezeigt) umfasst. Im Adsorptionsschritt durchströmt die eingeleitete Umgebungsluft das Sorptionselement und kontaktiert das Sorptionsmittel, bevor die Kohlenstoffdioxid arme Luft durch die Auslassöffnung 32 abgeleitet wird. Zur Einstellung einer geeigneten Desorptionstemperatur oder Regenerationstemperatur innerhalb des Prozessraums, umfasst das Sorptionsmodul zudem ein Heizelement 70 (hier nicht gezeigt).

Wie in den Figuren 2 und 3 gezeigt, umfasst der Mantel 20 erfindungsgemäß einen Innenmantel 22 und einen Außenmantel 24, der den Innenmantel 22 (gasdicht) umschließt. Der Innenmantel 22 weist in der illustrierten Ausführungsform zwei gegenüberliegende Schächte 26 und 26a auf. Der Innenmantel 22 kann einteilig, mehrteilig oder, wie gezeigt, zweiteilig ausgestaltet sein. Beide Schächte erstrecken sich jeweils über die gesamte Höhe H des Innenmantels und sind innenseitig über die gesamte Höhe des Schachts zum Prozessraum offen, sodass im Desorptionsschritt oder im Regenerationsschritt ein Gas vom Prozessraum in den Schacht einströmen kann. Wie in Figur 3 gezeigt sind Innenmantel 22 und Außenmantel 24 in direktem Kontakt zueinander angeordnet. Die Tiefe T des Schachts entspricht hier der Dicke D des Innenmantels 22.

Der Außenmantel 24 weist zwei gasdicht verschließbare Entnahmeöffnungen 28 und 28a auf, die innenseitig über jeweils einen der zwei Schächte 26 oder 26a des Innenmantels mit dem Prozessraum 40 verbunden sind. Die gasdicht verschließbaren Entnahmeöffnungen 28 und 28a können, wie gezeigt, als Durchgangsbohrung durch den Außenmantel ausgeformt sein und in der oberen Hälfte des Außenmantels angeordnet sein. Die gasdicht verschließbaren Entnahmeöffnungen 28 und 28a sind zudem außenseitig mit dem regelbaren Mittel zur Erzeugung eines Unterdrucks 80 (zum Beispiel mit einer Vakuumpumpe) verbunden. Zwischen den jeweiligen Entnahmeöffnungen 28 und 28a und der Vakuumpumpe können ein oder (wie in Figur 2 gezeigt) zwei Mittel zum Schließen der Entnahmeöffnung 29, 29a (zum Beispiel eine regelbare Armatur) zwischengeordnet sein, um den Gasfluss von der Entnahmeöffnungen zur Vakuumpumpe zu regeln oder (wie in Figur 2 gezeigt) zu unterbinden. Freigesetztes Kohlenstoffdioxid kann in einem CO₂-Speicher 82 gelagert werden, welcher mit der Entnahmeöffnung verbunden ist. Freigesetztes Wasser kann über einen Wasserauslass 84 verworfen werden, welcher mit der Entnahmeöffnung verbunden ist.

Figur 4 zeigt die Ausführungsform des Sorptionsmoduls 100 in schematischer Querschnittsansicht. Das Sorptionselement 60 umfasst erfindungsgemäß das Sorptionsmittel 62 und ein Mittel zum Fixieren des Sorptionsmittels. Letzteres ist in der Ausführungsform in Figur 4 als luft- und feuchtigkeitsdurchlässige Tasche 64 ausgestaltet, die das Sorptionsmittel 62 beinhaltet. Die Tasche 64 verhindert ein Eindringen des Sorptionsmittels 62, hier in Form von Granulat, in den Schacht 26. Die Länge L des Schachts 26 entspricht hier der Höhe H des Innenmantels.

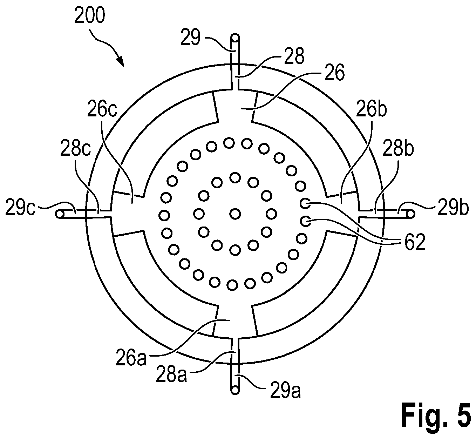

Die in Figur 5 gezeigte schematische Draufsicht einer weiteren Ausführungsform des Sorptionsmoduls 200 unterscheidet sich von dem zuvor beschriebenen Sorptionsmodul 100 in der Anzahl der Schächte und Entnahmeöffnungen. Die gezeigten vier Schächte 26, 26a, 26b und 26c des Innenmantels sind in gleichmäßigen Abständen zueinander angeordnet. Auch die entsprechenden Entnahmeöffnungen 28, 28a, 28b und 28c sind in gleichmäßigen Abständen zueinander angeordnet. Durch die Vielzahl der Schächte und deren gleichmäßiger Abstand zueinander ergibt sich im Mittel für die freigesetzten Wasser- und Kohlenstoffdioxid-Moleküle eine verkürzte Strecke durch das Sorptionsmittel. Hierdurch können Heizdauer und Evakuierungsdauer, und somit der Energiebedarf, während des Desorptions- und Regenerationsschritts weiter reduziert werden. Die regelbaren Mittel zum Schließen der Entnahmeöffnung 29, 29a, 29b und 29c, können als regelbare Armaturen ausgestaltet sein und unabhängig voneinander gesteuert werden, um beispielsweise bei einer ungleichmäßigen Verteilung des gesättigten Sorptionsmittels eine räumlich variable Strömung zu erzeugen.

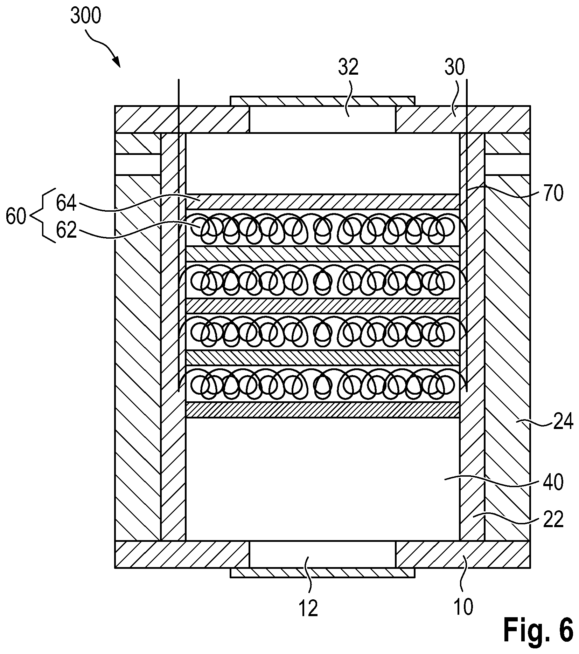

Figur 6 zeigt eine weitere Ausführungsform des Sorptionsmoduls 300 in schematischer Querschnittsansicht. Der erfindungsgemäße, mindestens eine Schacht 26 des Innenmantels 22 und die mindestens eine Entnahmeöffnung 28 des Außenmantels sind nicht gezeigt. Figur 6 zeigt das regelbare Heizelement 70, welches als Heizspirale ausgestaltet ist und in das Sorptionselement 60 integriert ist. Das regelbare Heizelement 70 steht zumindest teilweise mit dem Adsorptionsmittel in direktem Kontakt, sodass eine direkte Wärmeübertragung erfolgt.

Alle Ausführungsformen können optional eine Steuereinheit 90 umfassen, die dazu ausgelegt ist mittels eines Sensorsystems, umfassend mindestens einen aus Temperatursensor, Drucksensor, Luftfeuchtesensor und Durchflusssensor, entsprechende Parameter im Sorptionsmodul zu erfassen und dazu eingerichtet sein kann den Strömungserzeuger, das Mittel zur Erzeugung eines Unterdrucks, das regelbare Heizelement, das regelbare Mittel zum Schließen der Entnahmeöffnung sowie gasdicht verschließbare Einlassöffnung der Basis und die gasdicht verschließbare Auslassöffnung der Abdeckung unabhängig voneinander zu steuern.

### Bezugszeichenliste

- 100,200,300: Sorptionsmodul
- 10: Basis
- 12: gasdicht verschließbare Einlassöffnung
- 20: Mantel
- 22: Innenmantel
- 24: Außenmantel
- 26,26a,26b,26c: Schacht
- 28,28a,28b,28c: gasdicht verschließbare Entnahmeöffnung
- 29,29a,29b,29c: regelbares Mittel zum Schließen der Entnahmeöffnung (Armatur, Absperrventil, Absperrklappe)
- 30: Abdeckung
- 32: gasdicht verschließbare Auslassöffnung
- 40: Prozessraum
- 50: Strömungserzeuger
- 60: Sorptionselement
- 62: Sorptionsmittel
- 64: Mittel zum Fixieren des Sorptionsmittels
- 70: regelbares Heizelement
- 80: regelbares Mittel zur Erzeugung eines Unterdrucks (Vakuumpumpe, Kondensationspumpe)
- 82: CO₂-Speicher
- 84: Wasserauslass
- 90: Steuereinheit
- 92: Sensorsystem (Temperatursensor, Drucksensor, Luftfeuchtesensor, Durchflusssensor)

## Patentansprüche

1. Sorptionsmodul (100, 200, 300) zur Abtrennung von Kohlenstoffdioxid aus der Umgebungsluft, umfassend:
eine Basis (10), einen Mantel (20) und eine Abdeckung (30), die einen Prozessraum (40) bilden, wobei der Mantel (20) den Prozessraum (40) umschließt, die Basis (10) eine gasdicht verschließbare Einlassöffnung (12) aufweist, und die Abdeckung (30) eine gasdicht verschließbare Auslassöffnung (32) aufweist;
einen Strömungserzeuger (50) zur Förderung von Umgebungsluft durch den Prozessraum (40);
mindestens ein Sorptionselement (60), das im Prozessraum (40) angeordnet ist, wobei das Sorptionselement (60) ein Sorptionsmittel (62) zur Adsorption von Kohlenstoffdioxid aus der Umgebungsluft und ein Mittel (64) zum Fixieren des Sorptionsmittels (62) umfasst;
ein regelbares Heizelement (70) zur Aufheizung des Sorptionsmittels (62) auf eine Desorptionstemperatur oder eine Regenerationstemperatur; und
ein regelbares Mittel zur Erzeugung eines Unterdrucks (80) im Prozessraum;
**dadurch gekennzeichnet, dass**
der Mantel (20) einen Innenmantel (22) und einen den Innenmantel umschließenden Außenmantel (24) umfasst;
der Innenmantel (22) mindestens einen Schacht (26) aufweist, der sich über die Höhe des Innenmantels (22) erstreckt und innenseitig über die gesamte Höhe des Schachts (26) zum Prozessraum (40) offen ist; und
der Außenmantel (24) mindestens eine gasdicht verschließbare Entnahmeöffnung (28, 28a) aufweist, die in einer Öffnungsstellung innenseitig über jeweils einen Schacht (26, 26a) des Innenmantels mit dem Prozessraum (40) verbunden ist und außenseitig mit dem regelbaren Mittel zur Erzeugung eines Unterdrucks (80) verbunden ist.

2. Sorptionsmodul (100, 200, 300) nach Anspruch 1, wobei der Innenmantel (22) zum stationären Außenmantel (24) beweglich angeordnet ist und so konfiguriert ist, dass in einer Schließstellung der Innenmantel (22) die Entnahmeöffnung (28) des Außenmantels gasdicht schließt und in einer Öffnungsstellung je ein einziger Schacht (26) des Innenmantels (22) mit einer einzigen Entnahmeöffnung (28) des Außenmantels (24) verbunden ist.

3. Sorptionsmodul (100, 200, 300) nach einem der Ansprüche 1 und 2, wobei der Außenmantel (24) ein Mittel (29) zum Schließen der Entnahmeöffnung (28) umfasst, das mit der Entnahmeöffnung (28) verbunden ist.

4. Sorptionsmodul (100, 200, 300) nach einem der vorstehenden Ansprüche, wobei der Innenmantel (22) mindestens zwei Schächte (26, 26a, 26b, 26c), vorzugsweise in einem gleichmäßigen Abstand zueinander, aufweist und der Außenmantel (24) gleich viele Entnahmeöffnungen (28, 28a, 28b, 28c) aufweist.

5. Sorptionsmodul (100, 200, 300) nach einem der vorstehenden Ansprüche, wobei das mindestens eine Sorptionsmittel (62) insgesamt 75 % bis 95 % Raumfüllung, vorzugsweise 80 % bis 95 % Raumfüllung des Prozessraums (40) ausfüllt.

6. Sorptionsmodul (100, 200, 300) nach einem der vorstehenden Ansprüche, wobei die Entnahmeöffnung des Außenmantels innerhalb der oberen Hälfte des Außenmantels angeordnet ist.

7. Sorptionsmodul (100, 200, 300) nach einem der vorstehenden Ansprüche, wobei das Sorptionsmittel (64) ein Physisorbent ist.

8. Sorptionsmodul (100, 200, 300) nach einem der vorstehenden Ansprüche, wobei das Mittel zum Fixieren des Sorptionsmittels als Tasche oder Träger ausgestaltet ist.

9. Sorptionsmodul (100, 200, 300) nach einem der vorstehenden Ansprüche, wobei das regelbare Heizelement (70) in das Sorptionselement integriert ist und vorzugsweise als Heizspirale oder als Heizmatte ausgestaltet ist.

10. Sorptionsmodul (100, 200, 300) nach einem der vorstehenden Ansprüche, wobei eine Vielzahl von Sorptionselementen (60) seriell im Prozessraum angeordnet sind.
